# NOUVEAU FASCICULE DE BREVET EUROPEEN

(11) **EP 0 419 329 B2**
(45) Date de publication et mention de la décision concernant l'opposition: **04.12.1996**
(45) Mention de la délivrance du brevet: 08.12.1993
(21) Numéro de dépôt: 90402535.0
(22) Date de dépôt: 14.09.1990
(51) Int. Cl.: F16D 13/64

(54) **Friction d'embrayage à faible inertie, notamment pour véhicule automobile**
Reibungskupplungsscheibe mit niedriger Trägheit, insbesondere für Kraftfahrzeuge
Low inertia friction clutch disc, especially for an automotive vehicle

(30) Priorité: 22.09.1989 FR 8912466
(43) Date de publication de la demande: 27.03.1991
(73) Titulaire: VALEO, 75848 Paris Cédex 17 (FR)
(72) Inventeur: Graton, Michel, F-75020 Paris (FR); Tauvron, Fabrice, F-94000 Créteil (FR)
(74) Mandataire: Gamonal, Didier

(56) Documents cités:
- EP-A- 0 252 583
- FR-A- 2 255 499
- GB-A- 2 039 637
- GB-A- 2 191 831
- US-A- 1 862 991
- US-A- 2 253 316
- US-A- 2 307 006

## Description

La présente invention se rapporte à une friction d'embrayage, notamment pour véhicule automobile, selon le préambule de la revendication 1.

Une telle friction est décrite dans le document FR-A-2 255 499. Dans celui-ci, pour améliorer le parallélisme des garnitures, les supports sont conformés de façon à former un canal annulaire commun à l'intérieur duquel se trouve un anneau en matière élastique, qui précontraint les supports. Sous charge les rebords du canal viennent en contact en sorte que l'on n'a pas une bonne répartition de pression. La friction d'embrayage est en outre mal ventilée.

Dans les documents GB-A-2 191 831 et EP-A-0252 583, comme dans le document US-A-2 253 316, il n'y a qu'un seul support, qui périphériquement se divise en deux parties chacune en forme de pattes.

Chaque partie sert de support à une garniture de friction. Il en résulte un risque de déformation en cône des garnitures de friction et une certaine rigidité du support. En outre dans ces documents on obtient circonférentiellement une déformation sinusoïdale du support et des garnitures.

Le document FR-A-2 600 732 divulgue une disposition avec au moins un élément de progressivité métallique, formant ressort, intercalé entre les deux garnitures de friction, qui dans certaines réalisations est solidaire d'au moins un support ; chaque garniture étant associée à un support.

En outre pour éviter la déformation en cône des deux garnitures de friction, les supports comportent des bras radiaux s'étendant vers l'extérieur et chaque bras d'un support se termine par un crochet coopérant avec un crochet analogue, lui faisant face, d'un bras de l'autre support.

Une telle disposition permet la création d'une friction d'embrayage à faible inertie, présentant notamment des garnitures de friction d'épaisseur réduite, tout en ayant une bonne progressivité d'embrayage.

Néanmoins elle fait appel à un très grand nombre de pièces pliées et est relativement complexe.

En outre dans ce type de réalisation, contrairement à ce qui se passe dans le document GB-A-2 191 831, il se produit une différence de raideur entre le bord circonférentiel de plus grand diamètre des garnitures de friction et le bord circonférentiel de plus petit diamètre desdites garnitures, en sorte que, en service un échauffement aussi régulier que possible, ainsi qu'une usure aussi régulière que possible des garnitures ne sont pas obtenus.

La présente invention a pour objet de pallier ces inconvénients de manière simple et économique tout en conservant l'avantage d'une disposition à supports annulaires et en ayant une bonne ventilation.

Ce problème est résolu selon l'invention, par les caractéristiques techniques de la partie caractéristique de la revendication 1.

Grâce à cette disposition les protubérances sont bien ventilées et la raideur de la friction peut être sensiblement constante de la périphérie externe à la périphérie interne de ses garnitures de friction avec sous charge une bonne répartition de pression.

L'agencement permet d'utiliser comme matière élastique pour les protubérances un caoutchouc de faible densité. Les ouvertures améliorent l'élasticité des supports et la progressivité. Elles favorisent la ventilation.

Ainsi la friction a une bonne progressivité et sous charge elle s'adapte bien aux déformations thermiques du plateau de pression et de réaction, de sorte que les garnitures ont une usure régulière.

On appréciera que les supports ont une épaisseur relativement faible et qu'ils participent à la progressivité de la friction tout en permettant une fixation des garnitures de friction sans avoir recours à des rivets de fixation, ce qui permet de conserver une faible inertie à la friction d'embrayage. De plus, les supports constituent un écran thermique pour les protubérances.

On notera également qu'il est tiré parti de la conformation des supports ménageant entre eux un espace axial précis favorisant la fabrication de la friction d'embrayage, l'élément de progressivité pouvant être aisément fixé audit support.

En outre il est possible de créer un sous-ensemble manipulable et transportable grâce à l'élément de progressivité en matière élastique reliant entre elles les garnitures de friction.

Dans les documents GB-A-2191831, EP-A-0252 583 et US-A-2253316 le support doit avoir une épaisseur plus importante que les supports selon l'invention pour transmettre le même couple. Une moins bonne progressivité est ainsi obtenue.

En outre, les garnitures de friction de ces documents sont moins bien soutenues.

Grâce à la caractéristique de la revendication 2 l'opération de démoulage des protubérances est facilitée. Grâce à la caractéristique de la revendication 4 on obtient une bonne ventilation.

La description qui va suivre illustre l'invention en référence aux dessins annexés dans lesquels :
- la figure 1 est une vue de face partielle, avec arrachement local en partie basse, d'une friction d'embrayage suivant l'invention;
- la figure 2 est une vue en coupe selon la ligne 1-1 de la figure 1;
- la figure 3 est une vue partielle de face montrant une protubérance en forme d'ailette.

En se référant aux figures on a représenté une friction d'embrayage 1, notamment pour véhicule automobile, comprenant deux garnitures de friction annulaires et coaxiales 2 et 3, solidarisées en rotation et fixées à un flasque (non visible), lié en rotation à un moyeu (non représenté), par exemple, par rivetage. Les garnitures 2 et 3 sont accolées et fixées chacune à un support 5,6.

Plus précisément, le matériau de friction 4 de chaque garniture 2,3 est directement surmoulé ou adhérisé sur un support annulaire 5,6, respectivement. Les deux supports 5,6 se font face axialement et sont ici métalliques en étant de faible épaisseur. Ils consistent ici en des clinquants.

Chaque support 5,6 comporte un anneau plat 7,8 d'où fait saillie vers l'intérieur un prolongement radial 9,10. Les supports 5,6 sont distincts l'un de l'autre.

Ici, les prolongements 9,10 sont pliés en direction l'un de l'autre de façon à se rejoindre pour leur fixation mutuelle, leurs portions radiales internes étant parallèle entre elles et aux anneaux 7,8.

Les plis 33 des prolongements 9,10 sont obliques et améliorent l'élasticité axiale de ceux-ci. Ils se raccordent aux anneaux 7,8.

Les garnitures de friction 2 et 3 sont écartées axialement l'une de l'autre du fait de la configuration de leur support 5,6 ménageant un espace axial précis.

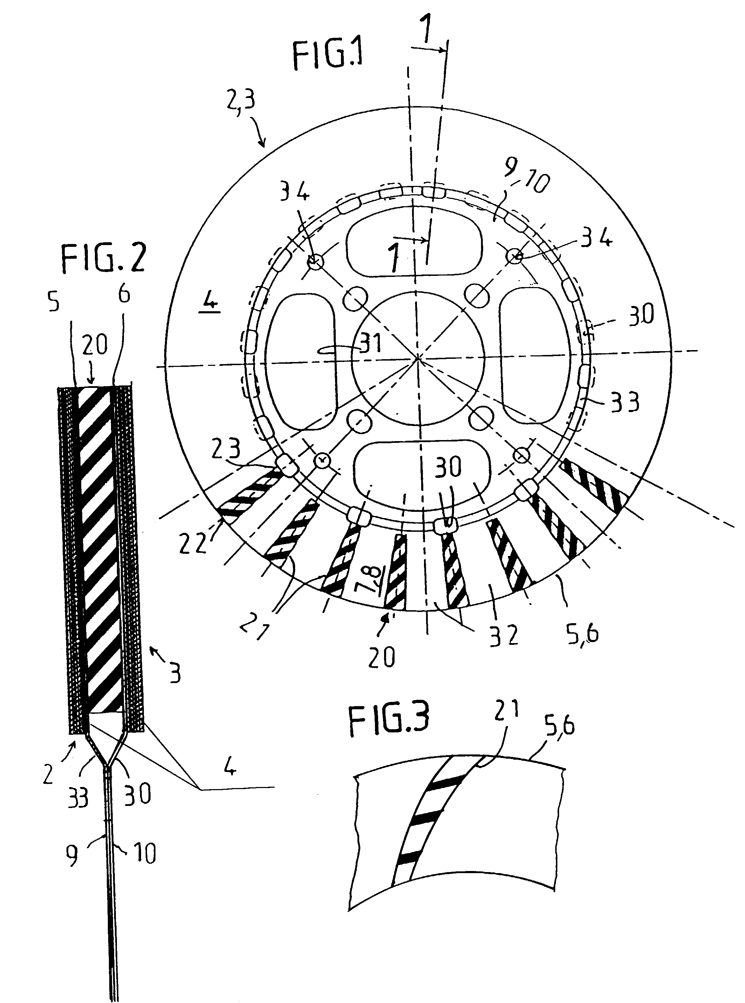

Lesdits prolongements 9,10 sont perçés (trous 34 à la figure 1) et fixés à une rondelle de guidage (non visible) en mettant à profit les entretoises joignant entre elles les deux rondelles de guidage.

Pour plus de précision on se reportera par exemple à la figure 4 du sus-mentionné document FR-A-2 600 732.

Selon l'invention la friction comporte en outre un élément de progressivité 20, formant ressort, intercalé entre les deux garnitures de friction 2 et 3 et constitué par une pluralité de protubérances 21 en matière élastique, dont certaines au moins sont solidaires des deux supports 5,6 et relient entre eux lesdits supports 5,6, lesdites protubérances 21 délimitant entre elles des canaux 32 et présentant à leur périphérie externe une portée 22, de plus grande étendue circonférentielle, que la portée 23 qu'elles présentent à leur périphérie interne.

Ici toutes les protubérances 21 sont solidaires à la fois des supports 5,6, qui sont ainsi reliés entre eux par les protubérances 21 surmoulées ou adhérisées à ceux-ci. Même en cas de ruptures de protubérances, on a donc toujours la possibilité de transmettre un couple, le véhicule n'étant ainsi jamais immobilisé.

Ces protubérances 21 s'étendent sensiblement radialement et ont en section une forme globalement trapézoïdale ; une ouverture 30 selon une caractéristique de l'invention étant présente au niveau de leur portée interne 23 et affecte les plis 33 continus.

Cette ouverture 30 est plus large circonférentiellement que ladite portée 23, en étant disposée radialement en-dessous de celle-ci. Elle est plus haute que le pli 33.

Ces protubérances sont collées sur les supports 5,6, du côté opposé au matériau de friction 4, et s'étendent globalement sur toute la hauteur des garnitures de friction 1,2 en étant plus hautes que larges.

La matière élastique des protubérances 21 peut être un caoutchouc à base de silicone résistant bien à la température. Avantageusement cette matière peut être de faible densité.

Ainsi il est possible de créer un sous-ensemble manipulable et transportable avec les supports 5,6 et l'élément de progressivité 20, puis de fixer sur les faces externes dudit sous-ensemble le matériau de friction 4.

En variante il est possible de fabriquer à part les garnitures de friction 2,3 avec leur support associé 5,6, puis de relier les deux sous-ensembles par l'élément de progressivité 20, les ouvertures 30 permettant une opération de moulage ainsi qu'ultérieurement une ventilation de l'ensemble, notamment quand les plis 33 sont continus. En outre, les ouvertures 30 améliorent l'élasticité des supports et la progressivité.

Ici les supports 5,6 à leur périphérie interne sont en forme de disque et sont dotés de fenêtres 31 de forme oblongue pour passage des ressorts que présente usuellement la friction d'embrayage.

On notera que les garnitures 2,3, avec leur support 5,6, sont identiques l'une à l'autre et qu'il y a une imbrication des protubérances 21 ainsi que des ouvertures 30, les fenêtres 31 étant en regard les unes des autres.

Les protubérances élastiques 21 vont en s'amincissant progressivement circonférentiellement de leur périphérie externe à leur périphérie interne.

Ainsi qu'on l'aura compris, lesdites protubérances 21 délimitant entre elles des canaux 32 qui débouchent ; une bonne ventilation favorisée par les ouvertures 30 est ainsi obtenue et lesdites protubérances 21 peuvent fluer circonférentiellement.

Une bonne progressivité axiale est obtenue lors du réembrayage lorsque les garnitures 2,3 se rapprochent l'une de l'autre en étant serrées progressivement entre le plateau de pression et de réaction de l'embrayage.

En outre compte tenu de la forme trapézoïdale des protubérances, la friction a radialement une raideur sensiblement constante de la périphérie externe à la périphérie interne de ces garnitures de friction, de sorte que sous charge une bonne répartition de pression peut être obtenue et que lesdites garnitures 2,3 peuvent épouser correctement la forme des plateaux de pression et de réaction de l'embrayage, même en cas d'échauffement de ceux-ci.

Lors de l'opération de débrayage les garnitures de friction 2,3 sont libérées et l'élément de progressivité 20 limite leur écartement axial, de sorte que lesdites garnitures 2,3 ne risquent pas de venir lécher le plateau de pression et/ou de réaction.

Ainsi qu'il ressort à l'évidence de la description et des dessins la taille et les dimensions des protubérances dépendent des applications.

Bien entendu la présente invention n'est pas limitée aux exemples de réalisation décrits.

En particulier la périphérie interne des supports peut consister en des languettes, comme décrit dans le sus-mentionné document FR-A-2 600 732.

De même les protubérances 21 au lieu de s'étendre radialement peuvent être inclinées dans le sens circonférentiel (figure 3) et former des ailettes avec une largeur circonférentielle (ou portée) plus grande à leur périphérie externe qu'à leur périphérie interne. Lesdites ailettes s'amincissent progressivement en allant de leur périphérie externe à leur périphérie interne.

Ainsi qu'il ressort à l'évidence de la description, toutes les protubérances 21 sont solidaires d'au moins l'un des supports 5,6, certaines pouvant n'être solidaires que d'un support pour obtention d'une progressivité variable, un espace libre existant alors entre lesdites protubérances 21 et le support dont elles ne sont pas solidaires.

Bien entendu les garnitures de friction 2,3 au lieu d'être annulaires peuvent être fractionnées comme les supports 5,6, qui se font mutuellement face axialement pour être reliées par les protubérances.

Il en est de même en ce qui concerne les prolongements radiaux 9,10 et leurs plis 33.

Les supports peuvent constituer le voile de la friction d'embrayage comme visible à la figure 7 du sus-mentionné brevet FR-A-2 600 732.

Les supports peuvent être fixés également à l'une des rondelles de guidage de la friction d'embrayage, à l'aide de rivets spécifiques comme visible à la figure 1 de ce sus-mentionné document.

Les supports peuvent ne pas être identiques entre eux, l'un pouvant être plan, tandis que l'autre présente un pli oblique pour accolement desdits supports à leur périphérie interne.

Les plis 33 peuvent être en accordéon ou analogues.

Enfin les ouvertures 30 au lieu d'être réparties régulièrement par alternance d'un disque à l'autre (figure 1) peuvent être réparties d'une autre manière, l'un des supports pouvant présenter un plus grand nombre d'ouvertures que l'autre, voir même toutes les ouvertures.

## Revendications

1. Friction d'embrayage, notamment pour véhicule automobile, du type comportant deux garnitures de friction coaxiales (2,3) écartées axialement l'une de l'autre et adhérisées ou surmoulées chacune sur un support (5,6) annulaire associé comportant un prolongement radial (9,10) dirigé vers l'intérieur, les deux dits supports (5,6), distincts l'un de l'autre, se faisant face mutuellement axialement et se rapprochant axialement l'un de l'autre par l'intermédiaire de leurs prolongements radiaux, dans laquelle un élément de progressivité (20) en matière élastique, formant ressort, est intercalé entre les deux garnitures de friction (2,3) en étant solidaire des deux supports (5,6), caractérisée en ce que, de manière connue en soi, l'élément de progressivité (20) est constitué par une pluralité de protubérances (21) en matière élastique délimitant entre elles des canaux (32) et présentant à leur périphérie externe une portée (22) de plus grande étendue circonférentielle que la portée interne (23), qu'elles présentent à leur périphérie interne, en ce que certaines au moins des protubérances (21) sont solidaires des deux supports (5,6) et relient entre eux lesdits supports (5,6), en ce que l'un au moins des prolongements radiaux (9,10) des supports (5,6) présente un pli (33) par l'intermédiaire duquel lesdits prolongements (9,10) se rejoignent pour leur fixation mutuelle et en ce que des ouvertures (30) sont ménagées dans le pli (33) dudit prolongement (9,10) au niveau de la portée interne de certaines au moins des protubérances (21).

2. Friction d'embrayage selon la revendication 1, caractérisée en ce que les ouvertures (30) sont disposées radialement en dessous desdites portées internes (23).

3. Friction d'embrayage selon la revendication 1 ou 2, caractérisée en ce que les ouvertures (30) sont plus hautes que les plis.

4. Friction d'embrayage selon la revendication 2 ou 3, caractérisée en ce que les ouvertures (30) ont une largeur circonférentielle supérieure à celle de la portée interne (23) de la protubérance (21) associée.

5. Friction d'embrayage selon l'une quelconque des revendications 1 à 4 dans laquelle les supports (5,6) sont indentiques l'un à l'autre et comportent chacun un prolongement radial (9,10), lesdits prolongements (9,10) étant pliés en direction l'un de l'autre de façon à se rejoindre pour leur fixation mutuelle, les plis (33) des supports (5,6) étant obliques, caractérisée en ce que d'un support (5,6) à l'autre il y a une imbrication des protubérances (21) ainsi que des ouvertures (30), une ouverture (30) étant associée à chaque protubérance (21).

6. Friction d'embrayage selon l'une quelconque des revendications 1 à 4 dans laquelle les supports (5,6) sont indentiques l'un à l'autre et comportent chacun un prolongement radial (9,10), lesdits prolongements (9,10) étant pliés en direction l'un de l'autre de façon à se rejoindre pour leur fixation mutuelle, les plis (33) des supports (5,6) étant obliques, caractérisée en ce que l'un des supports (5,6) présente toutes les ouvertures (30), une ouverture étant associée à chaque protubérance (21).

7. Friction d'embrayage selon l'une des revendications 1 ou 6, caractérisée en ce que lesdites protubérances (21) sont inclinées circonférentiellement et forment des ailettes.

8. Friction d'embrayage selon la revendication 7, caractérisée en ce que lesdites protubérances (21) s'amincissent progressivement en allant de leur périphérie externe à leur périphérie interne.

9. Friction d'embrayage selon l'une quelconque des revendications précédentes, caractérisée en ce que certaines des protubérances (21) sont solidaires de l'un des supports (5,6), un espace existant entre lesdites protubérances (21) et l'autre desdits supports (5,6).

## Claims

1. Clutch friction device, notably for a motor vehicle, of the type having two coaxial friction linings (2, 3) axially distant from each other and each bonded to or moulded on an associated annular support (5, 6) having a radial extension (9, 10) directed inwards, the said two supports (5, 6), distinct from each other, facing each other axially and axially approaching each other through their radial extensions, in which a progressive-action element (20) made of an elastic material and forming a spring is interposed between the two friction linings (2, 3) and fixed to the two supports (5, 6), characterised in that, in a manner known per se, the progressivity element (20) consists of a plurality of protuberances (21) made of an elastic material defining between them channels (32) and having on their external periphery a surface (22) with a greater circumferential extent than the internal surface (23) which they have at their internal periphery, in that at least some of the protuberances (21) are fixed to the two supports (5, 6) and interconnect the said supports (5, 6), in that at least one of the radial extensions (9, 10) of the supports (5, 6) has a fold (33) by means of which the said extensions (9, 10) are joined together for their mutual fixing and in that openings (30) are formed in the fold (33) on the said extension (9, 10) level with the internal surface of at least some of the protuberances (21).

2. Clutch friction device according to Claim 1, characterised in that the openings (30) are disposed radially below the said internal surfaces (23).

3. Clutch friction device according to Claim 1 or 2, characterised in that the openings (30) are higher than the folds.

4. Clutch friction device according to Claim 2 or 3, characterised in that the openings (30) have a circumferential width greater than that of the internal surface (23) of the associated protuberance (21).

5. Clutch friction device according to any one of Claims 1 to 4 in which the supports (5, 6) are identical to each other and each have a radial extension (9, 10), the said extensions (9, 10) being folded towards each other so as to be joined for their mutual fixing, the folds (33) on the supports (5, 6) being oblique, characterised in that from one support (5, 6) to the other there is interlacing of the protuberances (21) and of the openings (30), one opening (30) being associated with each protuberance (21).

6. Clutch friction device according to any one of Claims 1 to 4, in which the supports (5, 6) are identical to each other and each have a radial extension (9, 10), the said extensions (9, 10) being folded towards each other so as to be joined for their mutual fixing, the folds (33) on the supports (5, 6) being oblique, characterised in that one of the supports (5, 6) has all the openings (30), one opening (30) being associated with each protuberance (21).

7. Clutch friction device according to one of Claims 1 or 6, characterised in that the said protuberances (21) are inclined circumferentially and form wings.

8. Clutch friction device according to Claim 7, characterised in that the said protuberances (21) grow gradually thinner as they go from their external periphery to their internal periphery.

9. Clutch friction device according to any one of the preceding claims, characterised in that some of the protuberances (21) are fixed to one of the supports (5, 6), a space existing between the said protuberances (21) and the other one of the said supports (5, 6).

## Patentansprüche

1. Reibungskupplungsscheibe, insbesondere für Kraftfahrzeuge, enthaltend zwei koaxiale Reibbeläge (2, 3), die axial voneinander entfernt und jeweils auf einer zugehörigen ringförmigen Stütze (5, 6) verklebt oder überformt sind, die eine nach innen gerichtete radiale Verlängerung (9, 10) aufweist, wobei sich die beiden genannten, voneinander getrennten Stützen (5, 6) axial gegenüberliegen und sich über ihre radialen Verlängerungen axial aneinander annähern, wobei ein als Feder dienendes Progressivitätselement (20) aus elastischem Material zwischen den beiden Reibbelägen (2, 3) eingesetzt und fest mit den beiden Stützen (5, 6) verbunden ist , **dadurch gekennzeichnet**, daß auf an sich bekannte Weise das Progressivitätselement (20) aus einer Mehrzahl von Ausstülpungen (21) aus elastischem Material besteht, die dazwischenliegende Kanäle (32) begrenzen und an ihrer Außenperipherie eine Fläche (22) mit größerer Umfangsausdehnung aufweisen als die Innenfläche (23), die sie an ihrer Innenperipherie aufweisen, daß wenigstens bestimmte der genannten Ausstülpungen (21) fest mit den beiden Stützen (5, 6) verbunden sind und die genannten Stützen (5, 6) miteinander verbinden, daß wenigstens eine der radialen Verlängerungen (9, 10) der Stützen (5, 6) eine Falzung (33) aufweist, über die sich die genannten Verlängerungen (9, 10) zu ihrer gegenseitigen Befestigung verbinden, und daß in der Falzung (33) der genannten Verlängerung (9, 10) in Höhe der Innenfläche (23) von wenigsten bestimmten der Ausstülpungen (21) Öffnungen (30) vorgesehen sind.

2. Kupplungsscheibe nach Anspruch 1 , **dadurch gekennzeichnet,** daß die Öffnungen (30) radial unterhalb der genannten Innenflächen (23) angeordnet sind.

3. Kupplungsscheibe nach Anspruch 1 oder 2 , **dadurch gekennzeichnet**, daß die Öffnungen (30) höher sind als die Falzungen.

4. Kupplungsscheibe nach Anspruch 2 oder 3 , **dadurch gekennzeichnet,** daß die Öffnungen (30) eine größere Umfangsbreite aufweisen als die Innenfläche (23) der zugehörigen Ausstülpung (21).

5. Kupplungsscheibe nach einem der Ansprüche 1 bis 4, wobei die Stützen (5, 6) miteinander identisch sind und jeweils eine radiale Verlängerung (9, 10) aufweisen, während die genannten Verlängerungen (9, 10) in Richtung zueinander so gefalzt sind, daß sie sich zu ihrer gegenseitigen Befestigung vereinigen, wobei die Falzungen (33) der Stützen (5,6) schräg sind, **dadurch gekennzeichnet,** daß von einer Stütze (5, 6) zur anderen eine Verschachtelung der Ausstülpungen (21) sowie der Öffnungen (30) vorhanden ist, wobei jeder Ausstülpung (21) eine Öffnung (30) zugeordnet ist.

6. Kupplungsscheibe nach einem der Ansprüche 1 bis 4, wobei die Stützen (5, 6) miteinander identisch sind und jeweils eine radiale Verlängerung (9, 10) aufweisen, während die genannten Verlängerungen (9, 10) in Richtung zueinander so gefalzt sind, daß sie sich zu ihrer gegenseitigen Befestigung vereinigen, wobei die Falzungen (33) der Stützen (5,6) schräg sind, **dadurch gekennzeichnet**, daß eine der Stützen (5, 6) sämtliche Öffnungen (30) aufweist und dabei jeder Ausstülpung (21) eine Öffnung zugeordnet ist.

7. Kupplungsscheibe nach einem der Ansprüche 1 oder 6, **dadurch gekennzeichnet,** daß die genannten Ausstülpungen (21) am Kreisumfang geneigt sind und Rippen bilden.

8. Kupplungsscheibe nach Anspruch 7, **dadurch gekennzeichnet,** daß die genannten Ausstülpungen (21) von ihrer Außenperipherie zu ihrer Innenperipherie allmählich dünner werden.

9. Kupplungsscheibe nach einem der vorangehenden Ansprüche, **dadurch gekennzeichnet,** daß bestimmte der Ausstülpungen (21) fest mit einer der Stützen (5, 6) verbunden sind, wobei zwischen den genannten Ausstülpungen (21) und der anderen der genannten Stützen (5, 6) ein Zwischenraum besteht.
